Europäisches Patentamt

European Patent Office

Office européen des brevets

(19)

(11) Veröffentlichungsnummer: **0 173 676**
**A1**

(12) # EUROPÄISCHE PATENTANMELDUNG

(21) Anmeldenummer: 85890186.1

(22) Anmeldetag: 19.08.85

(51) Int. Cl.⁴: **B 04 B 1/20**, C 10 L 9/08

(30) Priorität: 30.08.84 AT 2788/84

(43) Veröffentlichungstag der Anmeldung: 05.03.86
Patentblatt 86/10

(84) Benannte Vertragsstaaten: BE CH DE FR GB IT LI LU NL SE

(71) Anmelder: **VOEST-ALPINE Aktiengesellschaft,
Friedrichstrasse 4, A-1011 Wien (AT)**

(72) Erfinder: **Janusch, Alois, Dipl.-Ing., Leopersdorf 109,
A-8652 Kindberg-Aumühl (AT)**
Erfinder: **Lugscheider, Walter, Dipl.-Ing. Dr.,
Bieselfeldweg 2, A-4040 Linz (AT)**

(74) Vertreter: **Haffner, Thomas M., Dr. et al,
Patentanwaltskanzlei Dipl.-Ing. Adolf Kretschmer Dr.
Thomas M. Haffner Schottengasse 3a, A-1014 Wien (AT)**

(54) **Zentrifuge für die Entwässerung und Trocknung vorentwässerter Schlämme.**

(57) Zur Entwässerung und Trocknung vorentwässerter Schlämme sowie organischer Stoffe sowie zur Extraktion und/oder Hydrolyse von Rohstoffen wird eine Zentrifuge vorgeschlagen, deren Zentrifugentrommel (2) einen zumindest teilweise von einem Spaltsieb gebildeten Mantel aufweist. Die Trommel ist in einem druckfesten, gasdicht verschließbaren Gehäuse aufgenommen, an welches Dampfzuführungsleitungen, Eintrags- (18) und Austragsschleusen (19) angeschlossen sind. Im Inneren der Zentrifugentrommel (2) ist koaxial eine Förderschnecke (3) rotierbar gelagert, deren Drehzahl verschieden von der Drehzahl der Zentrifugentrommel einstellbar ist. Die Förderschnecke (3) ist an einer Hohlwelle (4) angeordnet. Diese Hohlwelle (4) weist radiale Durchbrechungen (6) auf und ist mit einer Fördereinrichtung (5) für das Aufgabegut verbunden.

# Zentrifuge für die Entwässerung und Trocknung vorentwässerter Schlämme

Die Erfindung bezieht sich auf eine Zentrifuge für die Entwässerung und Trocknung vorentwässerter Schlämme sowie organischer Stoffe, insbesondere biogener Stoffe, sowie gegebenenfalls zur Extraktion und/oder Hydrolyse von Rohstoffen, mit einer in einem druckfesten, gasdicht verschließbaren Gehäuse rotierbar gelagerten Zentrifugentrommel, wobei an das Gehäuse wenigstens eine Eintrags-, wenigstens zwei Austragsschleusen und Dampfzuführungsleitungen angeschlossen sind.

Es ist bereits bekannt, organische und anorganische Stoffe unter Anwendung von Zentrifugalkraft zu entwässern, wobei die hiefür vorgeschlagenen Zentrifugen überlicherweise unter Normaldruck arbeiten und bei Verwendung von Schutzgas in einem gasdicht geschlossenen Gehäuse angordnet sind. Einrichtungen dieser Art werden üblicherweise als Dekanter bezeichnet, wobei die Ausscheidung der Feststoffe auf Grund der Dichteunterschiede aus der Suspension erfolgt. Derartige Dekanter bestehen aus einer Trommel mit einem zylindrischen und konischen Bereich, an deren Wänden sich der Feststoff unter dem Einfluß der Schwerkraft festsetzt. Der Feststoff wird mittels einer Schnecke, die gegenüber der Trommel eine unterschiedliche Drehzahl hat, aus dem konischen Teil ausgetragen. Die vom Feststoff weitgehend befreite Flüssigkeit fließt in entgegengesetzter Richtung aus dem zylindrischen Teil über ein Stauwehr ab. Die Steigung der konischen Trommel und die Länge der zylindrischen Trommel beeinflussen die Klärwirkung und die Entwässerung und müssen dem zu entwässernden Material angepaßt werden. Weitere Einflüsse sind der Trommeldurchmesser, die Umdrehungszahl von Trommel und Schnecke sowie die Höhe der Stauscheibe. Die mit diesen Geräten erzielbaren Entwässerungseffekte liegen zum Beispiel bei Klärschlamm je nach Zusammensetzung und Zudosierung von

- 2 -

Flockungsmitteln im Bereich 20 - max. 40 % TS (Trockensubstanz).

In der AT-PS 363.905 wird bereits beschrieben, daß bei kontinuierlicher Prozeßführung durch Zentrifugieren unter Dampfdruck wesentlich bessere Entwässerungseffekte erzielt werden können.

Die vorliegende Erfindung zielt nun darauf ab, eine Einrichtung der eingangs genannten Art zu schaffen, bei welcher unter Anwendung von Dampfdruck gearbeitet werden kann und Schlämme entwässert und gleichzeitig getrocknet oder aber auch Rohstoffe hydrolysiert für eine enzymatische Hydrolyse vorbereitet bzw. aufgeschlossen bzw. extrahiert werden können.

Zur Lösung dieser Aufgabe ist die erfindungsgemäße Zentrifuge so ausgebildet, daß der Mantel der Zentrifugentrommel zumindest teilweise als Spaltsieb ausgebildet ist, daß im Inneren der Zentrifugentrommel eine Förderschnecke koaxial zur Zentrifugentrommel rotierbar gelagert ist und daß die Drehzahl der Zentrifugentrommel verschieden von der Drehzahl der Förderschnecke einstellbar ist. Durch die Ausbildung der Zentrifugentrommel zumindest teilweise als Spaltsieb ergibt sich die Möglichkeit, große Flüssigkeitsmengen rasch abzuführen und dadurch, daß Teilbereiche der Zentrifugentrommel vollwandig ausgebildet werden können, läßt sich eine rasche Erwärmung und Vorbereitung des Materials für eine rasche Entwässerung erzielen. Die jeweilige Verweilzeit in vollwandigen bzw. als Spaltsieb ausgebildeten Teilbereichen der Zentrifugentrommel kann durch Wahl der Drehzahl der Förderschnecke in weiten Grenzen variiert werden und es läßt sich mit einer derartigen Ausbildung insbesondere erreichen, daß in einem ersten Teilbereich der Zentrifugentrommel, in welchem beispielsweise der Mantel der Zentrifugentrommel vollwandig ausgebildet ist, eine Erwärmung und Umschichtung des Materials erfolgt, bevor das Material in den als Spaltsieb ausgebildeten Bereich der Zentrifugentrommel gefördert wird. Die Einstellbarkeit der Verweilzeiten für die Vorwärmung und die Abtrennung des Wassers ermöglicht hiebei eine gezielte Verfahrensführung, mit welcher auch eine Extraktion bzw. Hydrolyse von Rohstoffen durchgeführt werden kann. Als Zentrifugendrehzahl kommen hiebei Umdrehungsgeschwindigkeiten von 200 bis 5000 $min^{-1}$ in Frage und der Antrieb der Förderschnecke ist vorzugsweise so ausgelegt, daß die Förderschnecke mit 0,1 bis 5 %, vorzugsweise 0,5 bis 2 % über oder unter der Zentrifugentrommeldrehzahl antreibbar ist.

Eine besonders einfache und betriebssichere Konstruktion ergibt sich, wenn die Förderschnecke koaxial mit der Zentrifugentrommel an einer Hohlwelle angeordnet ist und die Hohlwelle im Inneren der Zentrifugentrommel radiale Durchbrechungen aufweist und mit einer Fördereinrichtung für die Schlammaufgabe verbunden ist. Auf diese Weise kann die Materialaufgabe unmittelbar in das Innere der Zentrifugentrommel erfolgen und wenn der erste Teilbereich der Zentrifugentrommel vollwandig ausgebildet ist, läßt sich das bei Betrieb unter Dampfatmosphäre an dem noch relativ kühlen Material kondensierende Wasser rasch zur der Aufgabestelle benachbarten Stirnfläche der Zentrifugentrommel ableiten. Zu diesem Zweck ist vorzugsweise die Zentrifugentrommel in einem ersten der Schlammaufgabe benachbarten Bereich vollwandig ausgebildet, wobei an der dem Aufgabeende der Zentrifugentrommel benachbarten Stirnfläche Durchbrechungen und Stauscheiben, insbesondere verstellbare Stauscheiben, angeordnet sind. Es kann somit eine große Menge Haftwasser und kondensierendes Wasser bereits am Aufgabeende der Zentrifugentrommel abgeleitet werden und muß nicht über die als Spaltsieb ausgebildeten Bereiche abgezogen werden. Durch die Zuführung des zu entwässernden bzw. thermisch zu behandelnden Materials über die Hohlwelle im Inneren der Zentrifugentrommel kann auch sichergestellt werden, daß die Aufgabe etwa mittig im vollwandigen Bereich der Zentrifugentrommel erfolgt, wodurch die Ableitung von kondensierendem Wasser zur der Aufgabestelle benachbarten Stirnfläche erleichtert wird, da die entsprechenden Austragsöffnungen weniger leicht durch aufgebrachtes Material verstopft werden. Das aufgebrachte Material wird im vollwandigen Bereich bereits auf Grund der hohen Drehzahl komprimiert und es ergibt sich daher eine im wesentlichen konzentrisch zum Trommelmantel verlaufende innere Hüllfläche als Grenzfläche zwischen den Feststoffen und dem darüber liegenden kondensierenden Wasser, welches in entsprechendem radialen Abstand von der Mantelfläche über die Stirnfläche der Zentrifugentrommel abgezogen werden kann.

Die Ausbildung ist hiebei vorzugsweise so getroffen, daß die Achse der Zentrifugentrommel im wesentlichen horizontal angeordnet ist und daß Dampfzuführungsdüsen parallel zur Erzeugenden des Zentrifugentrommelmantels oberhalb der Zentrifugentrommel angeordnet sind. Eine derartige Ausbildung hat den Vorteil, daß durch Wahl einer geeigneten Relativgeschwindigkeit der Förderschnecke relativ zur Zentrifugentrommel die Verweilzeit in verschiedenen Teilbereichen der Zentrifugentrommel exakt eingestellt werden kann, wobei die Förderschnecke längs der Innenwand der Zentrifugentrommel das Material immer wieder abschält und wendet, wodurch die Entwässerungsleistung erhöht wird. Zu diesem Zweck ist vorzugsweise die Zentrifugentrommel zylindrisch ausgebildet und es ist die Förderschnecke an ihrer zylindrischen Hüllfläche mit Schneiden, insbesondere Hartmetallschneiden, ausgebildet. Die Schneiden der Förderschnecke bearbeiten den Schlammkuchen nach Art eines spananhebenden Werkzeuges und die jeweils entstehenden Späne geben unter Aufbrechen der benachbarten Grenzflächen neues Stoffwasser ab. Um möglichst kurze Späne mit der Förderschnecke abzuheben, ist vorzugsweise die Ausbildung so getroffen, daß die Hartmetallschneiden in Achsrichtung der Förderschnecke gesehen sägezahnartig und/oder in Umfangsrichtung der Förderschnecke abgesetzt bzw. zahnradförmig ausgebildet sind.

Zur rascheren Ableitung des von der Zentrifuge abgeschleuderten Materials verläuft in besonders einfacher Weise die Wand des druckfesten Gehäuses zumindest an ihrer den Dampfzuführungsleitungen gegenüberliegenden Seite zur Achse der Zentrifugentrommel geneigt, wobei die Austragsschleuse für das Zentrat an oder nahe der tiefsten Stelle des Gehäuses angordnet ist.

Um bei einem Transport des Materials in Achsrichtung der Zentrifugentrommel ein Verkleben bzw. Verstopfen der Siebdurchbrechungen der Zentrifugentrommel gering zu halten, ist die Ausbildung in besonders bevorzugter Weise so getroffen, daß der als Spaltsieb ausgebilete Bereich der Zentrifugentrommel achsparallele Siebstäbe und achsparallele Spalte aufweist.

Zur Erzielung einer besonders guten Siebwirkung wird bei gleichzeitig geringen Baumaßen in axialer Richtung die Ausbildung mit Vorteil so getroffen, daß die Steigung der Förderschnecke im Inneren der Zentrifugentrommel in axialer Richtung vom Aufgabeende zum Abwurfende des getrockneten Materials unterschiedlich ist, und vorzugsweise ausgehend vom Aufgabeende zum Austragsende hin abnimmt. Bei einer derartigen Ausbildung erfolgt vorzugsweise die Förderung des Materials zu Beginn, d.h. in dem in vorteilhafter Weise vollwandig ausgebildeten Bereich der Zentrifugentrommel rascher als in dem darauffolgenden, mit achsparallelen Siebstäben ausgebildeten Spaltsiebbereich, wenn die Steigung der Förderschnecke im Bereich der Spaltsiebe abnimmt.

Der Antrieb der Förderschnecke könnte prinzipiell in vorbestimmtem Verhältnis von der Drehzahlgeschwindigkeit der Zentrifugentrommel abgeleitet werden. In bevorzugter Weise weist jedoch die Förderschnecke und die Zentrifugentrommel jeweils einen gesonderten, regelbaren Antrieb auf, so daß beliebige Relativgeschwindigkeiten, und zwar sowohl eine relativ schnellere als auch eine relativ langsamere Drehgeschwindigkeit der Förderschnecke relativ zur Zentrifugentrommel erzielt werden können.

In konstruktiv besonders einfacher Weise ist die Fördereinrichtung für die Schlammaufgabe als Hochdruckschlammpumpe oder als im Inneren der hohlen Welle geführte Förderschnecke ausgebildet. Vor allem die Ausbildung der Fördereinrichtung als im Inneren der hohlen Welle geführte Förderschnecke bietet in einfacher Weise die Funktion einer Aufgabeschleuse bei in weiten Grenzen einstellbaren Durchsatzmenge bei der Materialaufgabe.

Um ein Abscheren des Kuchens von der Innenwand der Zentrifugentrommel zu gewährleisten, ist vorzugsweise der Innendurchmesser der Zentrifugentrommel 2 - 20 mm größer als der Durchmesser der Hüllkurve des Schneckenförderers.

Insbesondere auf Grund der unterschiedlichen Steigung der Förderschneckengänge über die axiale Länge der Zentrifugentrommel ist es zur Verkürzung der axialen Baulänge der Zentrifuge möglich, den vollwandigen Bereich der Zentrifugentrommel auf eine Teilbereich, insbesondere weniger als die Hälfte, vorzugsweise etwa 1/3 der axialen Länge der Zentrifugentrommel zu beschränken.

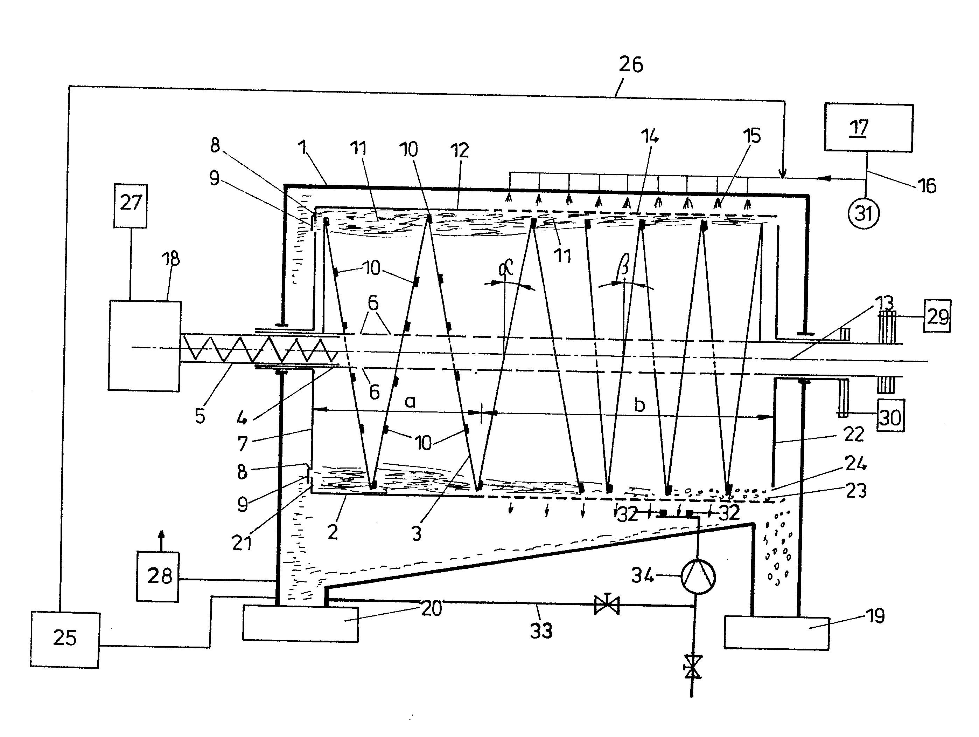

Die Erfindung wird nachfolgend anhand eines in der Zeichnung dargestellten Ausführungsbeispieles näher erläutert.

In der Zeichnung ist ein druckfestes Gehäuse 1 dargestellt, in welchem eine zylindrische Zentrifugentrommel 2 rotierbar gelagert ist. Für den Transport der Feststoffe ist eine Förderschnecke 3 vorgesehen, wobei die Förderschnecke 3 von einer Hohlwelle 4 getragen ist, an welcher auch die Zentrifugentrommel 2 gelagert ist. Die Zentrifugentrommel 2 verfügt ebenso wie die Hohlwelle 4 über einen gesonderten, nicht dargestellten Antrieb. In das Innere der Hohlwelle 4 ragt eine Förderschnecke 5, über welche das zu entwässernde bzw. zu behandelnde Material eingetragen wird. Die Hohlwelle 4 weist radiale Durchbrechungen 6 auf, über welche das Material in das Innere der Zentrifugentrommel 2 aufgegeben wird. An der dem Aufgabeende benachbarten Stirnwand 7 der Zentrifugentrommel 2 sind in axialer Richtung weisende Durchbrechungen 8 vorgesehen. Weiters sind verstellbare Stauscheiben 9 angeordnet, über welche der Durchflußquerschnitt dieser Öffnungen 8 eingestellt werden kann.

Die Förderschnecke 3 weist an ihrem Umfang Hartmetallschneiden oder keramische Schneidplatten 10 auf, deren Umfang in den sich bildenden Schlammkuchen 11 eintaucht. Die Schneiden können hiebei, wie dargestellt, in Umfangsrichtung unterbrochen ausgebildet sein, um das Abheben kurzer Späne innerhalb des Kuchens 11 sicherzustellen.

Die Zentrifugentrommel 2 weist einen ersten vollwandigen Teilbereich 12, welcher sich über eine axiale Länge a der Zentrifugentrommel erstreckt, auf. An diesen Bereich a schließt ein im wesentlichen doppelt so langer Teilbereich b an, in welcher der Mantel als Spaltsieb mit in Richtung der Achse 13 verlaufenden Siebstäben ausgebildet ist. Oberhalb dieses als Spaltsieb ausgebildeten Teilbereiches 14 der Zentrifugentrommel 2 sind im Inneren des Gehäuses 1 Dampfzuführungsdüsen 15 vorgesehen, welche über eine Leitung 16 mit einem Dampferzeuger verbunden sind. Die einzelnen Düsen 15 sind hiebei so gesteuert, daß jeweils einer Düse die volle Dampfmenge zur Verfügung gestellt wird, wodurch ein Ablösen des Schlammkuchens 11 an der Innenseite der Zentrifugentrommel bewirkt wird. Aus einem Behälter 17 können hiebei Chemikalien abgezogen werden und mit dem Dampf eingedüst werden.

Die Förderschnecke 5 für die Aufgabe des zu behandelnden Materials besitzt einen gesonderten Antrieb in einem Aufgabeteil 18 und stellt gleichzeitig eine Druckschleuse für den Eintrag dar. Für den Austrag der entwässerten bzw. behandelten Feststoffe nahe dem hinteren Ende der Zentrifugentrommel ist eine Druckschleuse 19 vorgesehen. An der tiefsten Stelle des Gehäuses ist eine weitere Austragsschleuse 20 vorgesehen. Zur Erzielung des gewünschten Staues für die Flüssigkeit am Eintragsende weist die Zentrifugentrommel 2 von ihrem Mantel ausgehend einen einwärts ragenden Bord 21 auf, welcher eine bestimmte Mindestschichtstärke am Eintragsende gewährleistet. Am Austragsende weist die Stirnseite 22 unmittelbar an die Innenwand 23 der Zentrifungentrommel 2 anschließende axiale Durchbrechungen 24 auf, welche das Abscheren und Austragen des getrockneten Feststoffes bis nahe dem austragsseitigen Stirnende sicherstellen. Die Steigung der Gänge der Förderschnecke 3 ist hiebei im Bereich 12, über welchen die Zentrifugentrommel 2 vollwandig ausgebildet ist, mit $\alpha$ bezeichnet und größer als die Steigung im Bereich 14 der Zentrifugentrommel 2, in welchem die Zentrifugentrommel als Spaltsieb ausgebildet ist. In diesem Bereich ist die Steigung der Gänge der Förderschnecke 3 mit ß bezeichnet.

Dieser Zentrifuge wird vorentwässerter Klärschlamm mit einem Trockensubstanzgehalt von etwa 20 bis 30 % zugeführt. Im Betrieb werden Dampfdrücke zwischen 1 und 40 bar gewählt, wobei bei Verwendung von Sattdampf mit Vorteil im Druckbereich von 3 bis 20 bar gearbeitet werden kann. Die Entwässerungsleistung ist hiebei von angewandtem Sattdampfdruck und der Drehzahl der Zentrifuge abhängig. Bei Einsatz von vorentwässertem Klärschlamm wurden folgende Werte gemessen.

| Sattdampfdruck | 5 bar | 10 bar | 20 bar |
|---|---|---|---|
| TS-Gehalt in % | 53,6 | 61,1 | 69,8 |

Bei einem Konstantdruck von 10 bar wurde die Abhängigkeit von der Drehzahl der Zentrifuge wie folgt ermittelt.

| Drehzahl $min^{-1}$ | 750 | 1500 | 2500 |
|---|---|---|---|
| TS-Gehalt in % | 53,9 | 61,0 | 61,1 |

Weitere Faktoren, die den Entwässerungseffekt maßgebend beeinflussen, sind die oberhalb von 100°C eintretenden chemischen Veränderungen in der organischen Substanz des Schlammes, die zur Freisetzung des gebundenen Wassers führen, die Herabsetzung der Viskosität des Wassers sowie die Verdichtung des Schlammes, die ein Auspressen des Wassers aus dem verbleibenden Schlammkuchen bewirkt. Die Höhe der eingebrachten vorentwässerten Schlammschicht beträgt z.B. vor Versuchsbeginn 80 mm, nach der Behandlung 8 - 12 mm.

Die Verdichtung des Schlammes während des Transportes, während des Zentrifugierens, der Wärmeübergang, die Abfuhr des Kondensates und des entbundenen Wassers bedingen eine neue Zentrifugenkonzeption.

Die über die Durchbrechungen 8 an der aufgabeseitigen Stirnseite der Zentrifugentrommel 2 relativ rasch abgeführte Wassermenge erlaubt es, das Kondensat hinreichend rasch abzuleiten, so daß eine weitere Erwärmung dieses Ballastwassers, welche mit Wärmeverlusten verbunden wäre, vermieden werden kann.

Im als Spaltsieb ausgebildeten Bereich der Zentrifugentrommel kommt es zu einer starken Verdichtung des Materiales, wobei sich die Höhe des Schlammkuchens auf etwa 10 % der Anfangshöhe verringert. Die Förderschnecke 3 muß daher in diesem Bereich hohe Scherkräfte überwinden. Um den Kraftaufwand zu verringern und möglichst feinkörniges Material zu erhalten, sind die Hartmetallschneiden 10 vorgesehen und es wird eine geringere Steigung ß der Schneckengänge gewählt. Zwischen dem äußersten Schneckenumfang und der Trommel verbleibt vorzugsweise eine ca. 3 mm starke Materialschicht, die einerseits die Spaltsiebe schützt und anderseits als Filterschicht wirkt und das abzuschleudernde Zentrat filtert. Auf diese Weise wird der in das Zentrat gehende Feststoffanteil minimiert. Um eine zu starke Verdichtung der Filterschicht zu verhindern, erfolgt die Zuführung von Dampf über Düsen, welche alternativ jeweils die volle Dampfmenge einzeln zugeführt erhalten. Der Düsenstrahl ermöglicht hier bei vorgegebener Gesamtdampfmenge das laufende Ablösen der an der Innenseite der Zentrifugentrommel anliegenden Materialien. Zur Erzielung einer ausreichenden Dampfgeschwindigkeit beträgt der Druckunterschied zwischen Zentrifugeninnern und Zuleitung 2 - 4 bar.

Der größere Steigungswinkel $\alpha$ im ersten Teilbereich des Feststofftransportes durch die Förderschnecke 3 ergibt eine gute Verteilung und Auflockerung für die rasche Wasserabführung. In diesem Teilbereich kann mit Anfangsschichtstärken von 80 mm gerechnet werden, wodurch sich eine entsprechende Dimensionierung des Ringbordes 21 ergibt. Während der Behandlung sinkt die Schichtstärke auf ca. 10 mm ab, wobei ausgehend von einer Anfangsfeuchte von ca. 70 % Restfeuchten von ca. 30 % und darunter erzielt werden können.

Mit einer derartigen Einrichtung kann auf Flockungshilfsmittel weitgehend oder zur Gänze verzichtet werden, wobei ein relativ geringer Energieaufwand für die Entwässerung erforderlich ist. Der Energieaufwand blieb durchwegs wesentlich unter dem theoretischen Wert für die Verdampfung des Wassergehaltes. Als Vorentwässerung für die Aufgabe des Materials mit 20 bis 30 Gew.% Trockensubstanz hat sich eine Siebbandpresse bewährt.

Mit der erfindungsgemäßen Einrichtung läßt sich ein Entwässern, d.h. ein Entfernen von Wasser aus Stoffen in
flüssiger Form ebenso wie ein Trocknen, d.h. ein Entfernen
von Wasser in Dampfform, erzielen. Weiters läßt sich bei
Einsatz von biogenen Stoffen, wie Heu, Stroh, Altpapier
od.dgl. bei gleichzeitiger Trocknung des Feststoffes eine
Hydrolyse erzielen, d.h. somit eine chemische Reaktion
vornehmen, bei der Verbindungen durch Einwirkung von Wasser
gespalten und dadurch löslich oder besser abbaubar werden.
Schließlich läßt sich auch beispielsweise bei Einsatz von
Rübenschnitzeln, Rinde, Bagasse od.dgl. oder anorganischen
Stoffen, wie z.B. Entölen von Flotationskonzentraten bei
gleichzeitiger Trocknung eine Extraktion vornehmen, bei
welcher bestimmte Bestandteile aus den Feststoffen mit Hilfe
von Wasser bzw. Wasserdampf als Lösungsmittel heraus- oder
abgelöst werden. Bei derartiger Extraktion erfolgt in der
Regel noch keine chemische Reaktion.

Für die Verwendung der Zentrifuge für Hydrolyse- oder
Extraktionszwecke kann dem von der Dampferzeugung kommenden
Dampf Wasser und/oder entsprechende Chemikalien aus dem
Behälter 12 eingedüst werden. Zur besseren Ausnützung der
Chemikalien können diese perkolierend dem einzubringenden
Dampf über dem Sammelbehälter 25 und die Leitung 26 bis zur
Erreichung der erforderlichen Sättigung eingedüst werden.
Erst dann erfolgt das Ausschleusen. Während der Perkolationszeit wird aus dem Behälter 17 nicht eingedüst.

Eine weitere erfindungsgemäße Ausführung für die Beimengung
von für die Hydrolyse oder die Extraktion notwendigen Stoffe
besteht darin, daß das Material in einem Konditionierungsbehälter 27 drucklos oder unter Dampfdruck für die Behandlung
vorbereitet wird.

Fallen bei der Behandlung in der Zentrifuge störende Gase, wie $CO_2$ an, die sich im unteren Teil der Zentrifuge absetzen, können diese über die Gasschleuse 28 entfernt werden.

Der Antrieb für die Förderschnecke ist als regelbarer Antrieb 29 ausgebildet. Ebenso ist auch der Antrieb 30 für die Zentrifuge regelbar. Die Dampferzeugung wurde mit 31 bezeichnet.

Für den Fall, daß zum Ankleben neigende Stoffe sich am Druckgehäuse festsetzen, können diese durch eine Düse 32 entweder mit vor der Druckschleuse 20 über eine Rohrleitung 33 mittels einer Pumpe 34 entnommenem Zentrat oder mit frischem heißen Kondensat abgespült werden.

Nachfolgend werden Anwendungsbeispiele für die Extraktion von extrahierbaren Stoffen aus stückigem Material und die Hydrolyse angegeben.

<u>Beispiele für die Extraktion von extrahierbaren Stoffen aus stückigen Naturprodukten:</u>
1.  Extraktion von Montanwachs aus bitumenreicher Braunkohle mit Benzol als Extraktionsmittel:
Montanwachs ist ein wertvolles Produkt für die Herstellung von Leder-, Fußboden-, Möbel- und Lackpflegemitteln.
2.  Extraktion von Fetten (Ölen) aus pflanzlichen und tierischen Produkten.
2.1. Pflanzliche Produkte:
Die Extraktion erfolgt im Anschluß an das Kaltpressen mit Hilfe von Hexan als Extraktionsmittel.
- Baumwollsamenöl,
- Palmöl (Palmfett, Palmbutter),
- Sojaöl,
- Sonnenblumenöl.
2.2 Tierische Produkte:

- 13 -

Bei diesen erfolgt die Extraktion vorwiegend mit Sattdampf, da die extrahierten Stoffe für technische Zwecke
verwendet werden.

- Extraktion von Fett aus Röhrenknochen für die
Seifenproduktion,

- Extraktion von Walöl und aus Speck sowie Knorpeln von
Walen.

3. Extraktion von technologisch wertvollen Pflanzeninhaltsstoffen.

3.1. Gerbstoffe:

Die Extraktion erfolgt mit Naßdampf (Wasserdampf +
kondensiertem Wasser, teilweise Verbindung mit verdünnten Säuren).

Zur Extraktion gelangen:

Rinden, Hölzer, Galläpfel.

3.2. Zucker:

Die Extraktion erfolgt nur mit Wasser.

Zur Extraktion gelangen:

Zuckerrohr, Rübenschnitzel.

3.3. Ätherische Öle, Harze:

Diese Stoffe sind wasserdampfflüchtig und können daher
mit Sattdampf extrahiert werden.

Extraktionsprodukte sind:

- Amerikanisches Holzterpentinöl, Wurzelharz, Pineoil,

- Naturkampfer.

3.4. Extraktion von Lignin zwecks Gewinnung von Zellulose aus
Einjahrespflanzenabfällen.

Zur Extraktion gelangen:

Getreidestroh, Maisstroh, Zuckerrohrbagasse.

Als Extraktionsmittel verwendet man 10 - 15 %ige NaOH,
die perkolierend über das zu behandelnde Material
geleitet wird.


Beispiele für die Hydrolyse von hydrolysierbaren Stoffen in
Naturprodukten.

Die Hydrolyse wird stets von einer Extraktion der gebildeten Hydrolyseprodukte begleitet. Als Hydrolysiermittel wird Sattdampf bzw. Naßdampf verwendet.

1. Hydrolyse von pflanzlichen Materialien.

1.1. Holzhydrolyse mit verdünnter (0,2 - 0,4 %iger $H_2SO_4$) nach dem Scholler-Tornesch-Verfahren. Es bilden sich hydrolytisch Mono- und Disaccharide, die nach der Extraktion mit Sattdampf vergoren werden können.

1.2. Hydrolyse von vorwiegend Hemicellulose (Pentosane) enthaltenden Materialien mit verdünnter $H_2SO_4$ zwecks Gewinnung von Furfural.

Als Materialien kommen in erster Linie Rückstände der Maisverarbeitung in Betracht.

2. Tierische Materialien.

Hydrolyse von kollagenhältigen Eiweißstoffen mit Sattdampf bzw. mit $H_2SO_4$-hältigem Naßdampf. Diese Hydrolysiermittel werden wieder perkolierend über das zu behandelnde Material geleitet.

2.1. Schlachthausabfälle, wie Häute, Knorpel, Knochen, Sehnen u.dgl.

Bei der Hydrolyse entsteht Gelatinelösung, die nach entsprechender Reinigung auf Speisegelatine verarbeitet wird.

Patentansprüche

1. Zentrifuge für die Entwässerung und Trocknung vorentwässerter Schlämme sowie organischer Stoffe, insbesondere biogener Stoffe, sowie gegebenenfalls zur Extraktion und/oder Hydrolyse von Rohstoffen, mit einer in einem druckfesten, gasdicht verschließbaren Gehäuse rotierbar gelagerten Zentrifugentrommel, wobei an das Gehäuse wenigstens eine Eintrags-, wenigstens zwei Austragsschleusen und Dampfzuführungsleitungen angeschlossen sind, dadurch gekennzeichnet, daß der Mantel der Zentrifugentrommel (2) zumindest teilweise als Spaltsieb ausgebildet ist, daß im Inneren der Zentrifugentrommel (2) eine Förderschnecke (3) koaxial zur Zentrifugentrommel (2) rotierbar gelagert ist und daß die Drehzahl der Zentrifugentrommel (2) verschieden von der Drehzahl der Förderschnecke (3) einstellbar ist.

2. Zentrifuge nach Anspruch 1, dadurch gekennzeichnet, daß die Förderschnecke (3) koaxial mit der Zentrifugentrommel (2) an einer Hohlwelle (4) angeordnet ist und daß die Hohlwelle (4) im Inneren der Zentrifugentrommel (2) radiale Durchbrechungen (6) aufweist und mit einer Fördereinrichtung für das Aufgabegut verbunden ist.

3. Zentrifuge nach Anspruch 1 oder 2, dadurch gekennzeichnet, daß die Achse (13) der Zentrifugentrommel (2) im wesentlichen horizontal angeordnet ist und daß Dampfzuführungsdüsen (15) parallel zur Erzeugenden des Zentrifugentrommelmantels oberhalb der Zentrifugentrommel (2) angeordnet sind.

4. Zentrifuge nach Anspruch 1, 2 oder 3, dadurch gekennzeichnet, daß die Wand des druckfesten Gehäuses (1) zumindest an ihrer den Dampfzuführungsleitungen (16) gegenüberliegenden Seite zur Achse (13) der Zentrifugentrommel (2) geneigt verläuft und daß die Austragsschleuse (20) für das Zentrat an oder nahe der tiefsten Stelle des Gehäuses (1) angeordnet ist.

5. Zentrifuge nach einem der Ansprüche 1 bis 4, dadurch gekennzeichnet, daß die Zentrifugentrommel (2) zylindrisch ausgebildet ist und daß die Förderschnecke (3) an ihrer zylindrischen Hüllfläche mit Schneiden (10), insbesondere Hartmetallschneiden, ausgebildet ist.

6. Zentrifuge nach einem der Ansprüche 1 bis 5, dadurch gekennzeichnet, daß die Hartmetallschneiden (10) in Achsrichtung der Förderschnecke (3) gesehen sägezahnartig und/oder in Umfangsrichtung der Förderschnecke abgesetzt bzw. zahnradförmig ausgebildet sind.

7. Zentrifuge nach einem der Ansprüche 1 bis 6, dadurch gekennzeichnet, daß der als Spaltsieb ausgebildete Bereich (14) der Zentrifugentrommel (2) achsparallele Siebstäbe und achsparallele Spalte aufweist.

8. Zentrifuge nach einem der Ansprüche 1 bis 7, dadurch gekennzeichnet, daß die Steigung ($\alpha$, $\beta$) der Förderschnecke (3) im Inneren der Zentrifugentrommel in axialer Richtung vom Aufgabeende zum Abwurfende des getrockneten Materials unterschiedlich ist, und vorzugsweise ausgehend vom Aufgabeende zum Austragsende hin abnimmt.

9. Zentrifuge nach einem der Ansprüche 1 bis 8, dadurch gekennzeichnet, daß die Förderschnecke (3) und die Zentrifugentrommel (2) jeweils einen gesonderten, regelbaren Antrieb (29, 30) aufweist.

10. Zentrifuge nach einem der Ansprüche 1 bis 9, dadurch gekennzeichnet, daß die Fördereinrichtung für die Schlammaufgabe als Hochdruckschlammpumpe oder als im Inneren der hohlen Welle (4) geführte Förderschnecke (5) ausgebildet ist.

11. Zentrifuge nach einem der Ansprüche 1 bis 10, dadurch gekennzeichnet, daß die Zentrifugentrommel (2) in einem ersten der Schlammaufgabe benachbarten Bereich (12) vollwandig ausgebildet ist und daß an der dem Aufgabeende der Zentrifugentrommel (2) benachbarten Stirnfläche (7) Durchbrechungen (8) und Stauscheiben (9), insbesondere verstellbare Stauscheiben, angeordnet sind.

12. Zentrifuge nach einem der Ansprüche 1 bis 11, dadurch gekennzeichnet, daß der Innendurchmesser der Zentrifugentrommel (2) 2 - 20 mm größer ist als der Durchmesser der Hüllkurve der Förderschnecke (3).

13. Zentrifuge nach einem der Ansprüche 1 bis 12, dadurch gekennzeichnet, daß sich der vollwandige Bereich (12) der Zentrifugentrommel (2) über weniger als die Hälfte, vorzugsweise etwa ein Drittel, der axialen Länge der Zentrifugentrommel (2) erstreckt.

14. Zentrifuge nach einem der Ansprüche 1 bis 13, dadurch gekennzeichnet, daß die Zentrifugentrommel (2) mit $200 - 5000 \text{ min}^{-1}$ und die Förderschnecke (3) mit 0,1 - 5 %, vorzugsweise 0,5 - 2 %, über oder unter der Zentrifugentrommeldrehzahl antreibbar ist.

15. Verwendung einer Zentrifuge nach einem der Ansprüche 1 bis 14 für die Entwässerung und/oder Trocknung, Hydrolyse und/oder Extraktion und/oder Vorbereitung für die enzymatische Hydrolyse.

16. Verwendung nach Anspruch 15, wobei vorentwässerter Klärschlamm mit 20 bis 30 Gew.% TS-Gehalt eingesetzt wird.

17. Verwendung nach Anspruch 15 oder 16, bei welcher Sattdampf im Druckbereich von 3 bis 20 bar und Zentrifugendrehzahlen von 750 bis 2500 $\text{min}^{-1}$ gewählt werden.

18. Verwendung nach einem der Ansprüche 15, 16 oder 17, bei welcher vor Inbetriebnahme des Zentrifugenantriebes oder während des Zentrifugierens Chemikalien perkolierend, vorzugsweise bis zur gewünschten Sättigung, zugeführt werden.

19. Verwendung nach einem der Ansprüche 15 bis 18, bei welcher die zu behandelnden Stoffe vor der Aufgabe in die Zentrifuge aufgeschlossen und/oder konditioniert werden.

20. Verwendung nach einem der Ansprüche 15 bis 19, bei welcher flüssige oder gasförmige Aufschlußmittel mit Dampf in den Behandlungsraum und/oder die Zentrifuge eingebracht werden.

21. Verwendung nach einem der Ansprüche 15 bis 20, bei welcher im Behandlungsprozeß gebildetes $CO_2$ vorzugsweise nahe der untersten Austragsschleuse abgeführt wird.

## EINSCHLÄGIGE DOKUMENTE

EP 85890186.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | AT - B - 363 905 (VOEST-ALPINE)<br>  * Seite 3, Zeile 51 - Seite 4, Zeile 42; Fig. 1 * | 1 | B 04 B 1/20<br>C 10 L 9/08 |
| A | | 15 | |
| | -- | | |
| Y | EP - A2 - 0 099 267 (THOMAS BROAD-BENT & SONS)<br>  * Seite 6, Zeile 8 - Seite 7, Zeile 15; Fig. 1,2 * | 1 | |
| A | | 2 | |
| | -- | | |
| A | DE - B2 - 2 305 326 (MASCHINENFA-BRIK BUCKAU)<br>  * Spalte 1, Zeile 45 - Spalte 2, Zeile 24; Spalte 2, Zeile 62 - Spalte 4, Zeile 11; Fig. 1,2 * | 1,2,15 | |
| | ---- | | |

RECHERCHIERTE
SACHGEBIETE (Int. Cl.4)

B 04 B

C 10 L

Der vorliegende Recherchenbericht wurde für alle Patentansprüche erstellt.

| Recherchenort | Abschlußdatum der Recherche | Prüfer |
|---|---|---|
| WIEN | 25-11-1985 | HAJOS |